# EUROPÄISCHE PATENTSCHRIFT

(11) **EP 3 183 997 B1**
(45) Veröffentlichungstag und Bekanntmachung des Hinweises auf die Patenterteilung: **21.11.2018**
(21) Anmeldenummer: 16201605.9
(22) Anmeldetag: 01.12.2016
(51) Int. Cl.: A47B 88/493, A47B 88/477, A47B 88/447, E05F 5/00, F16C 33/38

(54) **FÜHRUNGSEINRICHTUNG ZUR FÜHRUNG EINES RELATIV ZU EINEM MÖBELKORPUS BEWEGBAREN MÖBELTEILS**
GUIDE DEVICE FOR GUIDING A MOVABLE PART OF A PIECE OF FURNITURE RELATIVE TO THE BODY OF A PIECE OF FURNITURE
DISPOSITIF DE GUIDAGE POUR LE GUIDAGE D'UNE PIÈCE DE MEUBLE MOBILE PAR RAPPORT À UN CORPS DE MEUBLE

(30) Priorität: 22.12.2015 DE 202015008848 U
(43) Veröffentlichungstag der Anmeldung: 28.06.2017
(73) Patentinhaber: Grass GmbH, 6973 Höchst (AT)
(72) Erfinder: Janzen, Jörg, 6890 Lustenau (AT)
(74) Vertreter: Patentanwälte Magenbauer & Kollegen Partnerschaft mbB

(56) Entgegenhaltungen:
- AT-U1- 6 775
- CN-U- 204 132 846
- DE-A1-102004 002 823
- DE-U1-202005 014 127
- US-A1- 2008 303 395

## Beschreibung

Die Erfindung betrifft eine Führungseinrichtung zur Führung eines relativ zu einem Möbelkorpus bewegbaren Möbelteils, insbesondere Schublade, Tür oder Klappe, mit wenigstens einer Führungseinheit, die eine am Möbelkorpus befestigbare Korpusschiene und wenigstens eine über in einer Laufrichtung bewegliche Schienen-Führungsmittel relativ zur Korpusschiene verschieblich gelagerte, mit dem bewegbaren Möbelteil verbindbare Laufschiene aufweist, wobei die Schienen-Führungsmittel ihrerseits sowohl relativ verschieblich zur Korpusschiene als auch relativ verschieblich zu wenigstens Laufschiene gelagert sind und beim Ausfahren in eine Offenstellung einerseits an einen Anschlag an der Korpusschiene und andererseits an einen Anschlag an der Laufschiene anschlagen, und mit Dämpfungsmitteln zur Dämpfung des Anschlagens der Schienen-Führungsmittel an mindestens einen der Anschläge.

Aus einem druckschriftlichen nicht nachweisbaren Stand der Technik sind Ausziehführungen für bewegbare Möbelteile, insbesondere Schubladen, bekannt, die als Vollauszüge mit Korpusschiene, Mittelschiene und Schubladenschiene ausgestattet sind. Die Schienen sind relativ zueinander beweglich geführt. Zwischen den Schienen sind Rollenwagen mit Laufrollen eingesetzt. Die Schienen haben metallische Endanschläge, um ein Überziehen der gesamten Führung zu Vermeiden und eine Gesamtauszugslänge zu definieren. Die zwischen den Schienen angeordneten Rollenwagen laufen beim vollständigen Öffnen auf die Endanschläge der Schienen auf. Hierbei gilt es, das "harte" Auftreffen auf den Endanschlag zu dämpfen. Aus ebenfalls nicht nachweisbarem Stand der Technik ist es bereits bekannt, an der dem Endanschlag zugeordneten Stirnseite des Rollenwagens einen Dämpfer, beispielsweise in Form eines Gummipuffers, anzubringen. Dadurch wird der Aufprall des Rollenwagens auf den Endanschlag gedämpft.

Jedoch besteht bei Rollenwagen mit solchen Dämpfern das Problem, dass sie bei oftmaligem Aufprall auf die Endanschläge verschleißen, was einen Austausch notwendig macht. Eine gattungsgemäße Führungseinrichtung ist aus DE 202005014127U bekannt.

Aufgabe der Erfindung ist es daher, eine Führungseinrichtung der eingangs erwähnten Art zu schaffen, die gegenüber Führungseinrichtungen aus dem Stand der Technik weniger verschleißanfällig ist.

Diese Aufgabe wird durch eine Führungseinrichtung mit den Merkmalen des unabhängigen Anspruchs 1 gelöst. Weiterbildungen der Erfindung sind in den Unteransprüchen dargestellt.

Die Dämpfungsmittel sind von der Stirnseite entfernt und auf einen Bereich zwischen zwei Führungsabschnitten der Schienen-Führungsmittel verlegt. Es kommt also zu keinen direkten Kontakt der Dämpfungsmittel mit dem Endanschlag. Dadurch vermindert sich der Verschleiß.

Erfindungsgemäß sind Blockiermittel vorgesehen, die in einer Blockierstellung in Eingriff mit den Schienen-Führungsmitteln bringbar sind, in der eine Blockierung der Relativbeweglichkeit der Führungsabschnitte zueinander stattfindet.

Bei den vorerwähnten Dämpfern aus dem Stand der Technik schlagen die Schienen-Führungsmittel, beispielsweise Rollenwagen, auch beim Einfahren in die Schließstellung an zugeordnete Endanschläge an. Jedoch bleiben die Dämpfer in der Schließstellung aktiv, wodurch das bewegbare Möbelteil, insbesondere die Schublade, in der Schließstellung keine definierte Schließstellung einnimmt, da im Bereich des Dämpfungsweges des Dämpfers eine gewisse Nachgiebigkeit auch in der Schließstellung vorhanden ist. Beispielsweise könnte der Benutzer im Falle einer Schublade durch Druck auf die Frontblende die Schublade ein Stück weit nach innen drücken. Durch die Blockiermittel wird jedoch die Relativbeweglichkeit der Führungsabschnitte zueinander blockiert, so dass das bewegbare Möbelteil unabhängig von den Dämpfungsmitteln eine definierte Schließposition einnehmen kann.

Bei einer Weiterbildung der Erfindung erfolgt der Eingriff der Blockiermittel mit den Schienen-Führungsmitteln am Dämpfungsabschnitt zur Blockierung dessen Nachgiebigkeit. In bevorzugter Weise greifen die Blockiermittel also direkt in die im Dämpfungsabschnitt vorhandenen Dämpfungsmittel ein.

Bei einer Weiterbildung der Erfindung weisen die Dämpfungsmittel wenigstens ein Federelement auf, das einerseits an dem einen und andererseits an dem anderen Führungsabschnitt der Schienen-Führungsmittel gelagert ist. Bei dem Federelement kann es sich beispielsweise um einen aus dem Material der Führungsabschnitte, diese miteinander verbindende Materialstreifen handeln, der insbesondere mehrfach gewunden ist und somit eine elastische Nachgiebigkeit aufweist. Es ist jedoch auch möglich, dass das Federelement ein von den Führungsabschnitten separates Element ist, das einerseits an dem einen und andererseits an dem anderen Führungsabschnitt befestigt ist, beispielsweise eine Druckfeder, insbesondere aus Federstahl bestehend.

In besonders bevorzugter Weise weisen die Schienen-Führungsmittel eine Verbindungsstange zur Verbindung der Führungsabschnitte auf, die einen am einen Führungsabschnitt befestigten ersten Stangenabschnitt und einen am anderen Führungsabschnitt befestigten zweiten Stangenabschnitt aufweist zwischen denen der Dämpfungsabschnitt angeordnet ist.

Es ist möglich, dass die Verbindungsstange Bestandteil von Schienen-Abstützmitteln zur Abstützung der Laufschiene an der Korpusschiene ist. In besonders bevorzugter Weise sind die Schienen-Abstützmittel als Zahnstangen/Ritzel-Kombination ausgebildet, mit der als Zahnstange ausgebildeten Verbindungsstange und wenigstens einem beim Ein- oder Ausfahren des bewegbaren Möbelteils in kämmenden Eingriff bringbaren oder in kämmenden Eingriff stehenden Ritzel.

Bei einer Weiterbildung der Erfindung weist die Zahnstange einen mit mehreren in Laufrichtung hintereinander angeordneten Zähnen bestückten Zahnbereich auf, der sich über den ersten Stangenabschnitt, den Dämpfungsabschnitt und den zweiten Stangenabschnitt hinweg erstreckt.

In besonders bevorzugter Weise weisen die Dämpfungsmittel, insbesondere das Federelement, Zähne des Zahnbereichs auf. Zweckmäßigerweise ist das Ritzel Bestandteil der Blockiermittel.

In besonders bevorzugter Weise greift das Ritzel in der Blockierstellung in die im Dämpfungsabschnitt, insbesondere an dem Federelement, ausgebildeten Zähne ein. Durch den Formschluss zwischen dem Ritzel und den Zähnen im Dämpfungsabschnitt wird die elastische Nachgiebigkeit der Dämpfungsmittel blockiert.

Bei einer Weiterbildung der Erfindung weisen die Schienen-Führungsmittel wenigstens einen Rollenwagen mit Wagengehäuse und daran drehbar gelagerten Laufrollen auf.

In bevorzugter Weise sind zwei Laufschienen vorgesehen, von denen eine als relativ zur Korpusschiene über ein unteres Modul der Schienen-Führungsmittel verschieblich gelagerte Mittelschiene und eine andere als relativ zur Mittelschiene über ein oberes Modul der Schienen-Führungsmittel verschieblich gelagerte Auszugschiene ausgebildet sind.

Zweckmäßigerweise sind sowohl oberes als auch unteres Modul mit Dämpfungsabschnitten ausgestattet.

Die Erfindung umfasst ferner ein Möbel, mit einem relativ zu einem Möbelkorpus bewegbaren, über eine Führungseinrichtung geführten Möbelteil, das sich durch eine Führungseinrichtung nach einem der Ansprüche 1 bis 13 auszeichnet.

Bevorzugte Ausführungsbeispiele der Erfindung sind in der Zeichnung dargestellt und werden im Folgenden näher erläutert. In der Zeichnung zeigen:
- Figur 1: eine schematische Seitenansicht auf ein erstes Ausführungsbeispiel der erfindungsgemäßen Führungseinrichtung im ausgezogenen Zustand,
- Figur 2: eine vergrößerte Darstellung der Einzelheit X aus Figur 1,
- Figur 3: eine perspektivische Darstellung eines zweiten Ausführungsbeispiels der erfindungsgemäße Führungseinrichtung, wobei eine Variante der Schienen-Führungsmittel in der Perspektive dargestellt ist und
- Figur 4: eine perspektivische Ansicht der Schienen-Führungsmittel des ersten Ausführungsbeispiels der erfindungsgemäßen Führungseinrichtung.

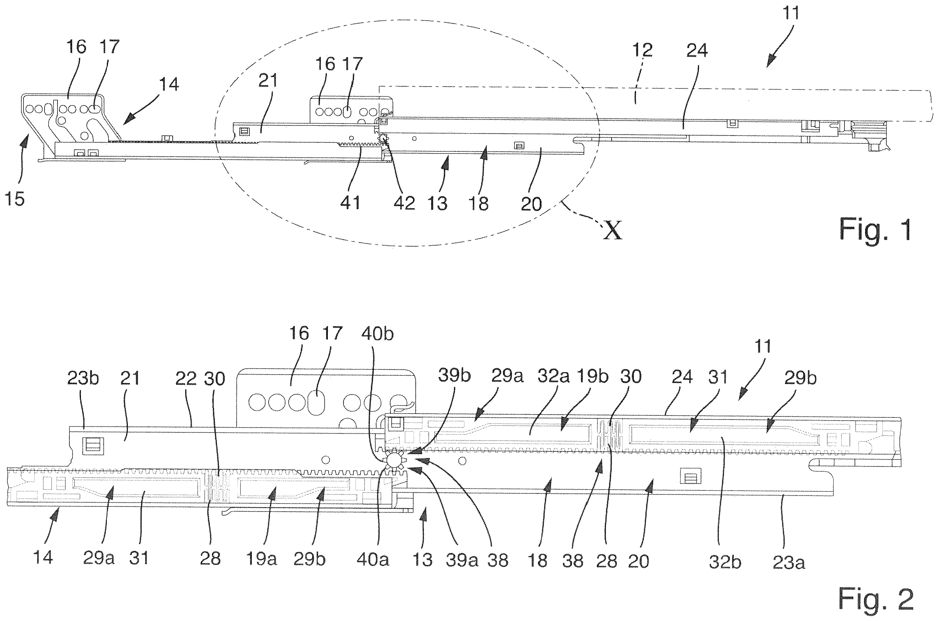

Die Figuren 1, 2 und 4 zeigen ein erstes Ausführungsbeispiel der erfindungsgemäßen Führungseinrichtung 11. Die Führungseinrichtung 11 ist hier beispielhaft beim Einsatz an einem als Schublade ausgebildeten bewegbaren Möbelteil 12 beschrieben. Es ist selbstverständlich möglich, die Führungseinrichtung 11 auch an anderen Möbelteilen, beispielsweise an Türen, Klappen oder dergleichen einzusetzen.

Im Folgenden wird die erfindungsgemäße Führungseinrichtung 11 jedoch am Beispielsfall Schublade erläutert. Die Schublade ist mittels der Führungseinrichtung 11 relativ zu einem Möbelkorpus (nicht dargestellt) verschieblich gelagert. Die Führungseinrichtung 11 umfasst wenigstens eine Führungseinheit 13, insbesondere zwei Führungseinheiten 13, die an einander entgegengesetzt liegenden Seitenrändern der Schublade angeordnet sind. In der Zeichnung ist lediglich eine einzelne Führungseinheit 13 gezeigt, jedoch ist die dem entgegengesetzten Seitenrand der Schublade zugeordnete andere Führungseinheit in identischer Weise aufgebaut.

Die Führungseinheiten 13 besitzen jeweils eine Korpusschiene 14, die beispielsweise als umgebogenes Blechbauteil ausgestaltet sein könnte. Die Korpusschiene 14 weist einen Korpuswinkel 15 auf, der wenigstens einen Montageschenkel 16 besitzt, der mehrere, beispielsweise in Reihen hintereinander angeordnete, Befestigungslöcher 17 aufweist, über die der Korpuswinkel 15 mit Hilfe geeigneter Befestigungsmittel an einer zugeordneten Seitenwand einer im Möbelkorpus ausgebildeten Schubladenaufnahme positionsfest befestigt werden kann. Der Korpuswinkel 15 besitzt einen winklig vom Montageschenkel 16 abstehenden Auflagenabschnitt, an dem eine ebenfalls zur Führungseinheit 13 gehörende Mittelschiene 18 in nachfolgend noch beschriebener Weise verschieblich geführt ist.

Wie insbesondere in Figur 2 dargestellt, ist die Mittelschiene 18 über ein unteres Modul von Schienen-Führungsmitteln 19a relativ zur Korpusschiene 14 verschieblich gelagert. Zweckmäßigerweise ist die Mittelschiene 18 ebenfalls als Blechprofil ausgestaltet, insbesondere mit U-artigem Querschnitt. Die Mittelschiene 18 besitzt hierzu einen im montierten Zustand der Führungseinrichtung 11 vertikal ausgerichteten Basisabschnitt 20, der eine flächige Vorderseite 21 und einer dieser entgegengesetzte, zum Montageschenkel 16 des Korpuswinkels 15 hin gerichtete flächige Rückseite 22 aufweist. An den Basisabschnitt 20 sind zwei im Wesentlichen parallel zueinander verlaufende Schenkelabschnitte 23a, 23b angeformt, die jeweils im Bereich der Rückseite 22 des Basisabschnitts 20 verlaufen.

Die Ober- und Unterseiten der Schenkelabschnitte 23a, 23b bilden Laufflächen für das untere Modul der Schienen-Führungsmittel 19a und auch für ein oberes Modul der Schienen-Führungsmittel 19b, wobei die Mittelschiene 18 über Letztere linear verschieblich an einer Auszugschiene 24 gelagert ist.

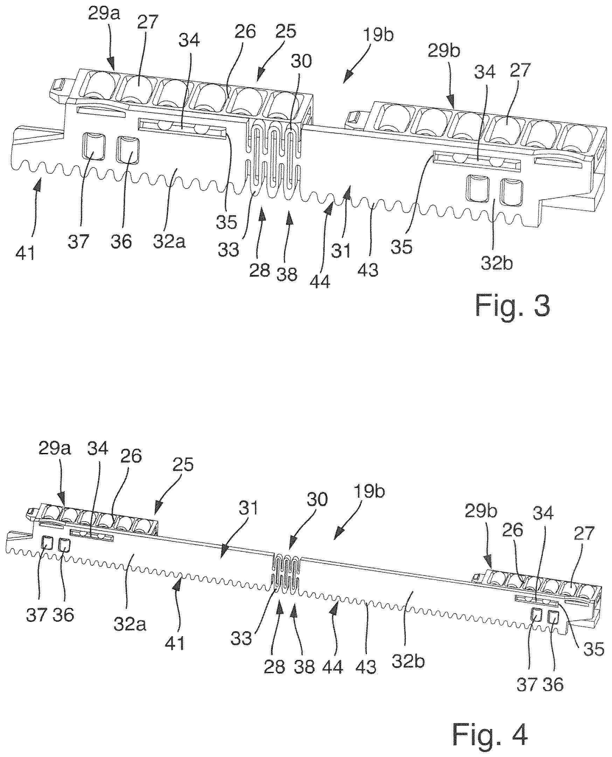

Wie insbesondere in Figur 4 dargestellt, besitzt das obere Modul der Schienen-Führungsmittel 19b wenigstens einen Rollenwagen 25, der ein Wagengehäuse 26 besitzt, das dem oberen Schenkelabschnitt 23b zugeordnet ist. Das Wagengehäuse 26 besteht zweckmäßigerweise aus Kunststoffmaterial. Das Wagengehäuse 26 erstreckt sich entlang des oberen Schenkelabschnitts 23b. Im Wagengehäuse 26 sind mehrere Laufrollen 27 aufgenommen und dort über geeignete Lagermittel drehbar gelagert. Die Laufrollen 27 sind zweckmäßigerweise in mehreren Laufrollen-Gruppen zu jeweils mehreren Laufrollen 27 gruppiert. Die Drehachsen der Laufrollen 27 erstrecken sich in der Ebene des zugeordneten oberen Schenkelabschnitts 23b. Jede Laufrollen-Gruppe besitzt eine Mehrzahl an oberen und eine Mehrzahl an unteren Laufrollen 27. Die oberen Laufrollen 27 einer Laufrollen-Gruppe sind in Längsrichtung hintereinander angeordnet, wobei ihre Drehachsen parallel zueinander ausgerichtet sind. Die oberen Laufrollen einer Laufrollen-Gruppe laufen mit Ihren Laufflächen auf der Oberseite des zugeordneten oberen Schenkelabschnitts 23b ab. Die unteren Laufrollen 27 einer Laufrollen-Gruppe sind den oberen Laufrollen 27 der gleichen Laufrollen-Gruppe gegenüberliegend, und zwar liegen sich stets paarweise eine obere Laufrolle 27 einer unteren Laufrolle 27 gegenüber, wobei zwischen den oberen und unteren Laufrollen 27 der zugeordnete obere Schenkelabschnitt 23b aufgenommen ist. Die unteren Laufrollen 27 einer Laufrollen-Gruppe laufen mit Ihren Laufflächen auf der Unterseite des zugeordneten oberen Schenkelabschnitts 23b der Mittelschiene 18 ab. Auch das untere Modul der Schienen-Führungsmittel 19a besitzt wenigstens einen Rollenwagen, der im Wesentlichen in identischer Weise wie der zuvor beschriebene Rollenwagen des oberen Moduls der Schienen-Führungsmittel 19b ausgebildet ist. Auch hier sind obere Laufrollen 27 und untere Laufrollen 27 vorgesehen, wobei die oberen Laufrollen 27 an der Oberseite des unteren Schenkelabschnitts 23a und die unteren Laufrollen an der Unterseite des unteren Schenkelabschnitts 23a laufen.

Die Auszugschiene 24, die im Beispielsfall auch als Schubladenschiene bezeichnet werden könnte, ist über Kopplungsmittel, insbesondere über Rastmittel, mit der Schublade gekoppelt.

Das untere Modul der Schienen-Führungsmittel 19a ist sowohl relativ verschieblich zur Korpusschiene 14 als auch relativ verschieblich zur Mittelschiene 18 gelagert. Das obere Modul der Schienen-Führungsmittel 19b hingegen ist sowohl relativ verschieblich zur Mittelschiene 18 als auch relativ verschieblich zur Auszugschiene 24 gelagert.

Das untere Modul der Schienen-Führungsmittel 19a schlägt beim Ausfahren der Schublade in die Offenstellung einerseits an einen Anschlag (nicht dargestellt) an der Mittelschiene 18 und andererseits an einen Anschlag an der Korpusschiene 14 an. Das obere Modul der Schienen-Führungsmittel 19b hingegen schlägt beim Ausfahren der Schublade in die Offenstellung einerseits an einen Anschlag an der Mittelschiene 18 und andererseits an einen Anschlag an der Auszugsschiene 24 an. Dabei läuft der Rollenwagen 25 des unteren Moduls der Schienen-Führungsmittel 19a stirnseitig auf die Anschläge an der Korpusschiene und an der Mittelschiene 18 auf, wobei gleichzeitig der Rollenwagen 25 des oberen Moduls der Schienen-Führungsmittel 19b auf die Anschläge an der Mittelschiene 18 und an der Auszugschiene 24 aufläuft.

Um den harten Anschlag der Rollenwagen 25 auf die Anschläge an den Schienen zu vermeiden, weist die Führungseinrichtung 11 Dämpfungsmittel 28 zur Dämpfung des Anschlagens der Schienen-Führungsmittel, also der Rollenwagen 25 an mindestens einen der Anschläge auf.

Die Schienen-Führungsmittel, also das untere Modul der Schienen-Führungsmittel 19a und auch das obere Modul der Schienen-Führungsmittel 19b weisen jeweils wenigstens zwei in Laufrichtung hintereinander angeordnete Führungsabschnitte 29a, 29b auf, die durch einen in der Laufrichtung nachgiebigen mit den Dämpfungsmitteln 28 ausgestatteten Dämpfungsabschnitt 30 miteinander verbunden sind.

Wie insbesondere in Figur 4 gezeigt, sind die beiden Führungsabschnitte 29a, 29b des oberen Moduls der Schienen-Führungsmittel 19b durch zwei in Laufrichtung hintereinander angeordnete Wagenteile des Rollenwagens 25 gebildet. Die Wagenteile besitzen jeweils ein Wagengehäuse 26, in denen jeweils eine Laufrollen-Gruppe aus einer Mehrzahl von oberen und unteren Laufrollen 27 in zuvor beschriebener Weise aufgenommen ist.

Wie insbesondere in Figur 4 dargestellt, sind die beiden Führungsabschnitte 29a, 29b also die beiden Wagenteile des Rollenwagens 25 des im Beispielsfall gezeigten oberen Moduls der Schienen-Führungsmittel 19b durch eine Verbindungsstange 31 miteinander verbunden. Die Verbindungsstange 31 besitzt einen am ersten Führungsabschnitt 29a befestigten ersten Stangenabschnitt 32a und einen am zweiten Führungsabschnitt 29b befestigten zweiten Stangenabschnitt 32b.

Wie ferner in Figur 4 gezeigt, ist der Dämpfungsabschnitt 30 mit den Dämpfungsmitteln 28 in Laufrichtung zwischen den beiden Stangenabschnitten 32a, 32b angeordnet.

Die Dämpfungsmittel 28 umfassen im gezeigten Beispielsfall wenigstens ein Federelement 33, das einerseits an dem einen und andererseits an dem anderen Führungsabschnitt 29a, 29b, insbesondere an dem einen Stangenabschnitt 32a und andererseits an dem anderen Stangenabschnitt 32b befestigt ist. Die beiden Stangenabschnitte 32a, 32b sind also über das Federelement 33 nachgiebig zueinander gelagert, womit auch durch die Ankopplung an die zugeordneten Führungsabschnitte 29a, b diese ebenfalls nachgiebig, insbesondere federnd zueinander gelagert sind.

Die Verbindungsstange 31 besteht im gezeigten Beispielsfall aus Kunststoffmaterial. Im gezeigten Beispielsfall besteht das Federelement 33 ebenfalls aus dem Material der Verbindungsstange 31. Das Federelement 33 ist im gezeigten Beispielsfall durch einen schmalen, gewundenen Materialstreifen gebildet, der einerseits an den ersten Stangenabschnitt 32a und andererseits an den zweiten Stangenabschnitt 32b angeformt ist. Es ist möglich, dass ein derartig ausgebildetes Federelement 33 bei der Herstellung der Verbindungsstange 31 gleich mit angeformt wird.

Wie insbesondere in Figur 4 gezeigt, ist die Verbindungsstange 31 an den der Vorderseite 21 der Mittelschiene zugeordneten Längsseiten der Wagenteile befestigt. Zur Befestigung der Verbindungsstange 31 besitzt der erste Führungsabschnitt 29a bzw. das erste Wagenteil eine von der Längsseite abragende nach vorne gerichtete Verbindungslasche 34. In identischer Weise ist auch am hinteren bzw. zweiten Führungsabschnitt 29b bzw. zweiten Wagenteil eine Verbindungslasche 34 ausgebildet. An der Verbindungsstange 31 befindet sich korrespondierend zu den Verbindungslaschen 34 am ersten Stangenabschnitt 32a eine schlitzartige Ausnehmung 35, die sich auch am zweiten Stangenabschnitt 32b wiederfindet. Die Verbindungsstange 34 lässt sich daher in einfacher Weise an den Führungsabschnitten 29a, b bzw. Wagenteilen befestigen, in dem die schlitzartigen Ausnehmungen 35 auf die zugeordneten Verbindungslaschen 34 aufgeclipst werden. Eine derart werkzeuglose Befestigung ist in einfacher und schneller Weise durchführbar. Daher ist auch das Auswechseln von Verbindungsstangen, beispielsweise im Falle von Verschleiß oder Beschädigungen in einfacher Weise durchführbar.

Die Verbindungsstange 31 bzw. die beiden Stangenabschnitte 32a, 32b besitzen jeweils noch eine Anzahl von fensterartigen Öffnungen 36 durch die hindurch Stützrollen 37, die an der Seitenwand der Wagenteile bzw. Führungsabschnitt 29a, 29b angeordnet sind, hindurch ragen.

Die Führungseinrichtung 11 besitzt ferner Blockiermittel 38, die in eine Blockierstellung in Eingriff mit den Schienen-Führungsmitteln 19a, 19b bringbar sind, in der eine Blockierung der Relativbewegung der Führungsabschnitte 29a, 29b zueinander stattfindet.

Die Verbindungsstange 31 ist Bestandteil von Schienen-Abstützmitteln 39 zur Abstützung der Auszugschiene 24 an der Mittelschiene und zur Abstützung der Mittelschiene 18 an der Korpusschiene 14.

Im gezeigten Beispielsfall sind dem unteren Modul der Schienen-Führungsmittel 19a untere Schienen-Abstützmittel 39a und dem oberen Modul der Schienen-Führungsmittel 19b obere Schienen-Abstützmittel 39b zugeordnet. Die Schienen-Abstützmittel 39a, 39b sind jeweils als Zahnstange/Ritzel-Kombination 40a, 40b ausgebildet. Die untere Zahnstange/Ritzel-Kombination 40a wird durch eine an der Verbindungsstange 31 des unteren Moduls der Schienen-Führungsmittel 19a ausgebildeten Zahnstange 41 und einem an der Mittelschiene 18 drehbar gelagerten Ritzel 42 gebildet. Die obere Zahnstangen/Ritzel-Kombination 40b wird hingegen von einer am oberen Modul der Schienen-Führungsmittel 19b ausgebildeten Zahnstange 41 und dem an der Mittelschiene drehbar gelagerten Ritzel 42 gebildet. Das Ritzel 42 an der Mittelschiene 18 kämmt also sowohl mit der Zahnstange 41 an der Verbindungsstange 31 des oberen Moduls der Schienen-Führungsmittel 19b als auch mit der Zahnstange 41 an der Verbindungsstange 31 des unteren Moduls der Schienen-Führungsmittel 19b.

Die Zahnstangen 41 am oberen und unteren Modul der Schienen-Führungsmitteln 19a, 19b sind in identischer Weise ausgebildet.

Die Zahnstange 41 besitzt einen mit mehreren in Laufrichtung hintereinander angeordneten Zähnen 43 bestückten Zahnbereich 44, der sich über den ersten Stangenabschnitt 32a, den Dämpfungsabschnitt 30 und den zweiten Stangenabschnitt 32b hinweg erstreckt.

Wie insbesondere in Figur 4 gezeigt, weist also auch das zwischen den beiden Stangenabschnitten 32a, 32b angeordnete Federelement 33 Zähne 43 des Zahnbereichs 44 auf.

Das Ritzel 42 ist Bestandteil der Blockiermittel 38, wobei es in der Blockierstellung in die im Dämpfungsabschnitt 30 am Federelement 33 ausgebildeten Zähne 43 eingreift und somit die Nachgiebigkeit der beiden Stangenabschnitte 32a, 32b zueinander blockiert, da die Zähne des Ritzels 42 in die Zahnzwischenräume des Zahnbereichs 44 des Federelements 33 eingreifen und die Zähne 43 am Federelement 33 in die Zwischenräume zwischen den Zähnen am Ritzel eingreifen, wodurch ein Zusammendrücken oder Auseinanderziehen der beiden Stangenabschnitte 32a, 32b verhindert ist.

Die Figur 3 zeigt ein zweites Ausführungsbeispiel der erfindungsgemäßen Führungseinrichtung 11. Das zweite Ausführungsbeispiel der Führungseinrichtung 11 unterscheidet sich von dem zuvor beschriebenen ersten Ausführungsbeispiel lediglich dadurch, dass die Verbindungsstange 31 kürzer als beim ersten Ausführungsbeispiel ausgebildet ist und daher der Abstand der beiden Wagenteile bzw. Führungsabschnitte 29a, 29b in Laufrichtung zueinander kürzer ist. Das zweite Ausführungsbeispiel zeigt also eine etwas kompaktere Bauform der Führungseinrichtung 11. Die Funktionsweise insbesondere beim Dämpfen des Anschlagens der Rollenwagen 25 ist dieselbe wie beim zuvor beschriebenen ersten Ausführungsbeispiel.

Beim Ausfahren der Schublade zieht der Benutzer die Schublade aus dem Schubladenfach. Dabei entfernt sich die Mittelschiene 18 und auch die Auszugschiene 24 von der Korpusschiene 14. Ferner entfernt sich die Auszugschiene 24 von der Mittelschiene 18. Das untere Modul der Schienen-Führungsmittel 19a und das obere Modul der Schienen-Führungsmittel 19b bewegen sich voneinander weg. Wird die Schublade vollständig ausgefahren, also in die Offenstellung gezogen, so schlägt der Rollenwagen 25 des unteren Moduls der Schienen-Führungsmittel 19a an einen Anschlag an der Korpusschiene 14 und an einen Anschlag an der Mittelschiene 18 an. Gleichzeitig schlägt der Rollenwagen 25 des oberen Moduls der Schienen-Führungsmittel 19b an einen Anschlag an der Mittelschiene 18 und an einen Anschlag an der Auszugschiene 24 an. Dabei schlägt der erste Führungsabschnitt 29a stirnseitig an den Anschlag an der Mittelschiene 18 oder an der Auszugschiene 24 und der zweite Führungsabschnitt 29b bzw. das zweite Wagenteil an den anderen der beiden Anschläge also an der Auszugschiene 24 oder an der Mittelschiene 18 an. Da zwischen den beiden Wagenteilen bzw. Führungsabschnitten 29a, 29b der Dämpfungsabschnitt 30 mit dem Federelement 33 angeordnet ist, wird der Aufprall gedämpft, da eine elastische Nachgiebigkeit zwischen den beiden Wagenteilen vorhanden ist.

Beim Einfahren der Schublade in die Schließstellung bewegen sich die beiden Module der Schienen-Führungsmittel 19a, 19b aufeinander zu. In der Schließstellung der Schublade greift das Ritzel 42 sowohl in die Zähne 43 des Federelements 33 der oberen Verbindungsstange 31 als auch in die Zähne 43 des Federelements 33 der unteren Verbindungsstange 31 ein und blockiert somit die Nachgiebigkeit der Führungsabschnitte 29a, 29b zueinander. Damit wird eine definierte Geschlossenposition der Schublade erzielt.

## Patentansprüche

1. Führungseinrichtung zur Führung eines relativ zu einem Möbelkorpus bewegbaren Möbelteils (12), insbesondere Schublade, Tür oder Klappe, mit wenigstens einer Führungseinheit (13), die eine am Möbelkorpus befestigbare Korpusschiene (14) und wenigstens eine über in einer Laufrichtung bewegliche Schienen-Führungsmittel (19a, 19b) relativ zur Korpusschiene (14) verschieblich gelagerte, mit dem bewegbaren Möbelteil (12) verbindbare Laufschiene (18, 24) aufweist, wobei die Schienen-Führungsmittel (19a, 19b) ihrerseits sowohl relativ verschieblich zur Korpusschiene (14) als auch relativ verschieblich zur wenigstens einer Laufschiene (18, 24) gelagert sind und beim Ausfahren in eine Offenstellung einerseits an einen Anschlag an der Korpusschiene (14) und andererseits an einen Anschlag an der Laufschiene (18, 24) anschlagen, und mit Dämpfungsmitteln (28) zur Dämpfung des Anschlagens der Schienen-Führungsmittel (19a, 19b) an mindestens einen der Anschläge, wobei die Schienen-Führungsmittel (19a, 19b) wenigstens zwei in Laufrichtung hintereinander angeordnete Führungsabschnitte (29a, 29b) aufweisen, die durch einen in der Laufrichtung nachgiebigen mit den Dämpfungsmitteln (28) ausgestatteten Dämpfungsabschnitt (30) miteinander verbunden sind, **dadurch gekennzeichnet, dass** Blockiermittel (38) vorgesehen sind, die in eine Blockierstellung in Eingriff mit den Schienen-Führungsmitteln (19a, 19b) bringbar sind, in der eine Blockierung der Relativbeweglichkeit der Führungsabschnitte (29a, 29b) zueinander stattfindet.

2. Führungseinrichtung nach Anspruch 1, **dadurch gekennzeichnet, dass** der Eingriff der Blockiermittel (38) mit den Schienen-Führungsmitteln (19a, 19b) am Dämpfungsabschnitt (30) zur Blockierung dessen Nachgiebigkeit erfolgt.

3. Führungseinrichtung nach einem der vorhergehenden Ansprüche, **dadurch gekennzeichnet, dass** die Dämpfungsmittel (28) wenigstens ein Federelement (33) aufweisen, das einerseits an dem einen und anderseits an dem anderen Führungsabschnitt (29a, 29b) der Schienen-Führungsmittel (19a, 19b) gelagert ist.

4. Führungseinrichtung nach einem der vorhergehenden Ansprüche, **dadurch gekennzeichnet, dass** die Schienen-Führungsmittel (19a, 19b) eine Verbindungsstange (31) zur Verbindung der Führungsabschnitte (29a, 29b) aufweist, die einen am einen Führungsabschnitt (29a) befestigten ersten Stangenabschnitt (32a) und einem am anderen Führungsabschnitt (29b) befestigten zweiten Stangenabschnitt (32b) aufweist zwischen denen der Dämpfungsabschnitt (30) angeordnet ist.

5. Führungseinrichtung nach einem der vorhergehenden Ansprüche, **dadurch gekennzeichnet, dass** die Verbindungsstange (31) Bestandteil von Schienen-Abstützmitteln (39a, 39b) zur Abstützung der Laufschiene (18, 24) an der Korpusschiene (14) ist.

6. Führungseinrichtung nach Anspruch 5, **dadurch gekennzeichnet, dass** die Schienen-Abstützmittel (39a, 39b) als Zahnstange/Ritzel-Kombination (40a, 40b) ausgebildet ist, mit der als Zahnstange (41) ausgebildeten Verbindungsstange (31) und wenigstens einem beim Ein- oder Ausfahren des bewegbaren Möbelteils (12) in kämmenden Eingriff bringbaren oder in kämmenden Eingriff stehenden Ritzel (42).

7. Führungseinrichtung nach Anspruch 6, **dadurch gekennzeichnet, dass** die Zahnstange (41) einen mit mehreren in Laufrichtung hintereinander angeordneten Zähnen (43) bestückten Zahnbereich (44) aufweist, der sich über den ersten Stangenabschnitt (32a), den Dämpfungsabschnitt (30) und den zweiten Stangenabschnitt (32b) hinweg erstreckt.

8. Führungseinrichtung nach Anspruch 7, **dadurch gekennzeichnet, dass** die Dämpfungsmittel (28), insbesondere das Federelement (33), Zähne (43) des Zahnbereichs (44) aufweisen.

9. Führungseinrichtung nach einem der Ansprüche 6 bis 8, **dadurch gekennzeichnet, dass** das Ritzel (42) Bestandteil der Blockiermittel (38) ist.

10. Führungseinrichtung nach Anspruch 9, **dadurch gekennzeichnet, dass** das Ritzel (42) in der Blockierstellung in die im Dämpfungsabschnitt (30), insbesondere an dem Federelement (33), ausgebildeten Zähne (43) eingreift.

11. Führungseinrichtung nach einem der vorhergehenden Ansprüche, **dadurch gekennzeichnet, dass** die Schienen-Führungsmittel (19a, 19b) wenigstens einen Rollenwagen (25) mit Wagengehäuse (26) und daran drehbar gelagerten Laufrollen (27) aufweist.

12. Führungseinrichtung nach einem der vorhergehenden Ansprüche, **dadurch gekennzeichnet, dass** zwei Laufschienen (18, 24) vorgesehen sind, von denen eine als relativ zur Korpusschiene (14) über ein unteres Modul der Schienen-Führungsmittel (19a) verschieblich gelagerte Mittelschiene (18) und eine andere als relativ zur Mittelschiene (18) über ein oberes Modul der Schienen-Führungsmittel (19b) verschieblich gelagerte Auszugschiene (24) ausgebildet sind.

13. Führungseinrichtung nach Anspruch 12, **dadurch gekennzeichnet, dass** sowohl oberes als auch unteres Modul der Schienen-Führungsmittel (19a, 19b) mit Dämpfungsabschnitten (30) ausgestattet sind.

14. Möbel, mit einem relativ zu einem Möbelkorpus bewegbaren, über eine Führungseinrichtung (11) geführtes Möbelteil (12), **dadurch gekennzeichnet, dass** die Führungseinrichtung (11) nach einem der vorhergehenden Ansprüche ausgebildet ist.

## Claims

1. Guiding device for the guidance of a furniture part (12) movable relative to a furniture carcass, in particular a drawer, door or flap, with at least one guide unit (13) which has a carcass rail (14) attachable to the furniture carcass and at least one running rail (18, 24), movably mounted relative to the carcass rail (14) via rail guidance means (19a, 19b) movable in a running direction, and connectable to the movable furniture part (12), wherein the rail guidance means (19a, 19b) in turn are mounted both movably relative to the carcass rail (14) and also movable relative to at least one of the running rails (18, 24), and when moving outwards into an open position on the one hand strike against a stop on the carcass rail (14) and on the other hand strike against a stop on the running rail (18, 24) and with damping means (28) for damping the striking against the rail guidance means (19a, 19b) on at least one of the stops, wherein the rail guidance means (19a, 19b) have at least two guide sections (29a, 29b) arranged consecutively in the running direction and connected to one another, with resilience in the running direction, by a damping section (30) equipped with the damping means (28), **characterised in that** locking means (38) are provided which, in a locking position, may be brought into engagement with the rail guidance means (19a, 19b), in which locking of the relative mobility of the guide sections (29a, 29b) towards one another takes place.

2. Guiding device according to claim 1, **characterised in that** the engagement of the locking means (38) with the rail guidance means (19a, 19b) is effected on the damping section (30) for locking its resilience.

3. Guiding device according to any of the preceding claims, **characterised in that** the damping means (28) have at least one spring element (33), which is mounted at one end to the one and at the other end to the other guide section (29a, 29b) of the rail guidance means (19a, 19b).

4. Guiding device according to any of the preceding claims, **characterised in that** the rail guidance means (19a, 19b) have a connecting rod (31) for connecting the guide sections (29a, 29b) and having a first rod section (32a) fixed to one guide section (29a) and a second rod section (32b) fixed to the other guide section (29b), between which the damping section (30) is located.

5. Guiding device according to any of the preceding claims, **characterised in that** the connecting rod (31) is part of rail support means (39a, 39b) for supporting the running rail (18, 24) on the carcass rail (14).

6. Guiding device according to claim 5, **characterised in that** the rail support means (39a, 39b) are in the form of a rack/pinion combination (40a, 40b), with the connecting rod (31) in the form of a rack (41), and at least one pinion (42) which may be brought into or stands in meshing engagement during inwards or outwards movement of the movable furniture part (12).

7. Guiding device according to claim 6, **characterised in that** the rack (41) has a toothed section (44) with several teeth (43) arranged consecutively in the running direction and which extends over the first rod section (32a), the damping section (30) and the second rod section (32b).

8. Guiding device according to claim 7, **characterised in that** the damping means (28), in particular the spring element (33), have teeth (43) of the toothed section (44).

9. Guiding device according to any of claims 6 to 8, **characterised in that** the pinion (42) is part of the locking means (38).

10. Guiding device according to claim 9, **characterised in that** the pinion (42) in the locking position engages in the teeth (43) formed in the damping section (30), in particular in the spring element (33).

11. Guiding device according to any of the preceding claims, **characterised in that** the rail guidance means (19a, 19b) have at least one trolley (25) with chassis (26), and rollers (27) rotatably mounted thereon.

12. Guiding device according to any of the preceding claims, **characterised in that** two running rails (18, 24) are provided, one of which is designed as a centre rail (18), movably mounted relative to the carcass rail (14) via a bottom module of the rail guidance means (19a), and another designed as a pull-out rail (24), movably mounted relative to the centre rail (18) via a top module of the rail guidance means (19b).

13. Guiding device according to claim 12, **characterised in that** both top and bottom modules of the rail guidance means (19a, 19b) are equipped with damping sections (30).

14. Piece of furniture, with a furniture part (12) which is movable relative to a furniture carcass and guided via a guiding device (11), **characterised in that** that the guiding device (11) is designed according to any of the preceding claims.

## Revendications

1. Dispositif de guidage servant à guider une partie de meuble (12) pouvant être déplacée par rapport à un corps de meuble, en particulier un tiroir, une porte ou une trappe, avec au moins une unité de guidage (13), qui présente un rail de corps (14) pouvant être fixé au niveau du corps de meuble et au moins un rail de roulement (18, 24) monté de manière à pouvoir coulisser par rapport au rail de corps (14) par l'intermédiaire de moyens de guidage de rails (19a, 19b) mobiles dans une direction de roulement, pouvant être relié à la partie de meuble (12) pouvant être déplacée, dans lequel les moyens de guidage de rails (19a, 19b) sont montés quant à eux à la fois de manière à pouvoir coulisser de manière relative par rapport au rail de corps (14) et de manière à pouvoir coulisser de manière relative par rapport à un rail de roulement (18, 24) et viennent buter, lors du déploiement dans une position ouverte, d'une part au niveau d'une butée au niveau du rail de corps (14) et d'autre part au niveau d'une butée au niveau du rail de roulement (18, 24), et avec des moyens d'amortissement (28) servant à amortir le mouvement des moyens de guidage de rails (19a, 19b) consistant à venir buter au niveau d'au moins une des butées, dans lequel les moyens de guidage de rails (19a, 19b) présentent au moins deux sections de guidage (29a, 29b) disposées les unes derrière les autres dans la direction de roulement, qui sont reliées les unes aux autres par une section d'amortissement (30) flexible dans la direction de roulement, équipée des moyens d'amortissement (28), **caractérisé en ce que** sont prévus des moyens de blocage (38), qui peuvent être amenés en prise avec les moyens de guidage de rails (19a, 19b) dans une position de blocage, dans laquelle un blocage de la possibilité de déplacement relatif des sections de guidage (29a, 29b) les unes par rapport aux autres a lieu.

2. Dispositif de guidage selon la revendication 1, **caractérisé en ce que** la prise des moyens de blocage (38) avec les moyens de guidage de rails (19a, 19b) est effectuée au niveau de la section d'amortissement (30) pour bloquer sa flexibilité.

3. Dispositif de guidage selon l'une quelconque des revendications précédentes, **caractérisé en ce que** les moyens d'amortissement (28) présentent au moins un élément de ressort (33), qui est monté d'une part au niveau d'une section de guidage et d'autre part au niveau de l'autre section de guidage (29a, 29b) des moyens de guidage de rails (19a, 19b).

4. Dispositif de guidage selon l'une quelconque des revendications précédentes, **caractérisé en ce que** les moyens de guidage de rails (19a, 19b) présentent une tige de liaison (31) servant à relier les sections de guidage (29a, 29b), qui présente une première section de tige (32a) fixée au niveau d'une section de guidage (29a) et une seconde section de tige (32b) fixée au niveau de l'autre section de guidage (29b), entre lesquelles la section d'amortissement (30) est disposée.

5. Dispositif de guidage selon l'une quelconque des revendications précédentes, **caractérisé en ce que** la tige de liaison (31) fait partie intégrante de moyens de soutien de rails (39a, 39b) servant à soutenir le rail de roulement (18, 24) au niveau du rail de corps (14).

6. Dispositif de guidage selon la revendication 5, **caractérisé en ce que** les moyens de soutien de rails (39a, 39b) sont réalisés sous la forme d'une combinaison crémaillère/pignon (40a, 40b), avec la tige de liaison (31) réalisée sous la forme d'une crémaillère (41) et au moins un pignon (42) pouvant être amené en prise par engagement ou se trouvant en prise par engagement lors du retour ou du déploiement de la partie de meuble (12) pouvant être déplacée.

7. Dispositif de guidage selon la revendication 6, **caractérisé en ce que** la crémaillère (41) présente une zone de dents (44) équipée de plusieurs dents (43) disposées les unes derrière les autres dans la direction de roulement, qui s'étend au-dessus de la première section de tige (32a), de la section d'amortissement (30) et de la seconde section de tige (32b).

8. Dispositif de guidage selon la revendication 7, **caractérisé en ce que** les moyens d'amortissement (28), en particulier l'élément de ressort (33), présentent des dents (43) de la zone de dents (44).

9. Dispositif de guidage selon l'une quelconque des revendications 6 à 8, **caractérisé en ce que** le pignon (42) fait partie intégrante des moyens de blocage (38).

10. Dispositif de guidage selon la revendication 9, **caractérisé en ce que** le pignon (42) vient en prise, dans la position de blocage, avec les dents (43) réalisées dans la section d'amortissement (30), en particulier au niveau de l'élément de ressort (33).

11. Dispositif de guidage selon l'une quelconque des revendications précédentes, **caractérisé en ce que** les moyens de guidage de rails (19a, 19b) présentent au moins un chariot à roulettes (25) avec un boîtier de chariot (26) et des roulettes de roulement (27) disposées de manière à pouvoir tourner au niveau de ce dernier.

12. Dispositif de guidage selon l'une quelconque des revendications précédentes, **caractérisé en ce que** sont prévus deux rails de roulement (18, 24), dont l'un est réalisé sous la forme d'un rail central (18) monté de manière à pouvoir coulisser par l'intermédiaire d'un module inférieur des moyens de guidage de rails (19a) par rapport au rail de corps (14) et l'autre est réalisé sous la forme d'un rail d'extraction (24) monté de manière à pouvoir coulisser par l'intermédiaire d'un module supérieur des moyens de guidage de rails (19b) par rapport au rail central (18).

13. Dispositif de guidage selon la revendication 12, **caractérisé en ce qu'**à la fois le module supérieur et le module inférieur des moyens de guidage de rails (19a, 19b) sont équipés de sections d'amortissement (30).

14. Meuble comprenant une partie de meuble (12) pouvant être déplacée par rapport à un corps de meuble, guidée par l'intermédiaire d'un dispositif de guidage (11), **caractérisé en ce que** le dispositif de guidage (11) est réalisé selon l'une quelconque des revendications précédentes.
